# EUROPÄISCHE PATENTANMELDUNG

(11) **EP 1 579 964 A1**
(43) Veröffentlichungstag der Anmeldung: **28.09.2005**
(21) Anmeldenummer: 05006023.5
(22) Anmeldetag: 18.03.2005
(51) Int. Cl.: B25J 19/00

(54) **Roboter mit Leitungsanordnung innerhalb eines Schwenkgelenks**

(30) Priorität: 23.03.2004 DE 102004014209
(71) Anmelder: Dürr Systems GmbH, 70435 Stuttgart (DE)
(72) Erfinder: Haas, Jürgen, 75438 Knittlingen (DE); Maxharraj, Bekim, 74321 Bietigheim-Bissingen (DE)
(74) Vertreter: Beier, Ralph

(57) **Zusammenfassung**

In einem beispielsweise 6-achsigen Lackierroboter werden für den Zerstäuber und ggf. für dessen Steuerung und für elektrische Antriebe benötigte Schläuche und Kabel (32) durch den Innenraum der beiden Roboterarme (22, 23) und durch deren hohle Gelenke (36) geführt und durch Zugentlastungsvorrichtungen (41, 42) so an den Gelenken fixiert, dass sie in den Gelenken bei ihren Biegungen längs oder in der Nähe einer Linie oder Ebene verlaufen, bei der ihre mechanische Beanspruchung möglichst gering ist.

## Beschreibung

Die Erfindung betrifft einen Roboter für ein oder mit einem Werkzeug für die serienweise Beschichtung, Bearbeitung oder Handhabung von Werkstücken gemäß dem Oberbegriff des Anspruchs 1.

Insbesondere kann es sich hierbei um Industrieroboter handeln, wie sie zum ggf. elektrostatischen Beschichten von Fahrzeugkarossen oder deren Teile mit Medien wie Lack, Dichtungs- oder Klebmaterial oder auch zur Handhabung von Karossenteilen verwendet werden, wobei unter dem Begriff "Roboter" an sich beliebige mehrachsige und programmgesteuerte Bewegungsautomaten oder Manipulatoren zu verstehen sind. Die Gelenke und sonstigen Freiheitsgrade von Robotern werden bekanntlich als "Achsen" bezeichnet. Derzeit für die oben genannten Zwecke übliche sechsachsige Lackierroboter (JOT Nr. 1/2004, S. 12-13) bestehen aus einem feststehenden oder linear verfahrbaren Grundkörper, einem auf dem Grundkörper um eine gewöhnlich vertikale Achse drehbaren Sockelkörper (Achse 1), einem an dem Sockelkörper um eine horizontale Achse schwenkbar gelagerten ersten Roboterarm (Achse 2), einem am freien Ende des ersten Roboterarms um eine ebenfalls horizontale Achse gelagerten zweiten Roboterarm (Achse 3) und einem dreiachsigen Handgelenk, an dem der Zerstäuber montiert ist. In den Roboter führen von außen die verschiedenen elektrischen Leitungen, die für die elektrischen Antriebsmotoren der sechs Achsen, für elektrische Steuerungen und ggf. für die Hochspannungsversorgung des Zerstäubers erforderlich sind, sowie die zahlreichen Schläuche für die dem Zerstäuber zuzuführenden Medien wie Lack, Verdünner und Druckluft. Wenn keine mit auswechselbaren Farbkartuschen bestückte Zerstäuber verwendet werden, sind die Farbschläuche in der Regel an die Ringleitungen eines zentralen Versorgungssystems angeschlossen und mit dem Zerstäuber über eine Farbwechselventilanordnung verbunden. Stattdessen kommt auch die Sonderfarbversorgung z.B. für kleine Farbmengen direkt aus zugehörigen Behältern (Hobbocks) in Betracht. Die Farbschläuche können innerhalb des Roboters und wenigstens theoretisch bis zum Zerstäuber molchbar sein (vgl. EP 1 314 480, DE 103 20 147), während eine Besonderheit der elektrischen Installationen darin besteht, dass die Antriebsmotoren und andere elektrische Bestandteile in explosionssicher mit Luft oder einem inerten Gas unter Druck gesetzten oder gespülten Kammern angeordnet werden (vgl. US 4 732 526 und 4 984 745), wobei die Schläuche für entzündbare Medien (als "Ex-Medien" bezeichnete Gefahrstoffe) aus Sicherheitsgründen außerhalb dieser Kammern verlaufen.

Bei allen derzeit in der Praxis üblichen Lackierrobotern der oben beschriebenen Art verlaufen die Leitungsanordnungen mit den benötigten Schläuchen und Kabeln außerhalb zumindest des ersten Roboterarms. Bekannt ist beispielsweise, die erforderlichen Schläuche und Kabel in flachen Energieführungsketten oder als Schlaucheinheit in das Gehäuse des Grundkörpers einzuführen und aus der Oberseite des das Antriebsgehäuse der Achsen 1 und 2 enthaltenden drehbaren Sockelkörpers herauszuführen. Von dort verlaufen sie an dem ersten Roboterarm entlang bis zu dem die Achse 3 bildenden Gelenk, hinter dem sie dann in den zweiten Roboterarm hineingeführt sind.

Da die für die Applikationstechnik erforderlichen Schläuche und Kabel seitlich außen an den ersten Roboterarm angebaut sind, vergrößern sie in erheblichem Maß die (in Längsrichtung der Schwenkachse des ersten Roboterarms gemessene) Breite des Roboters im Bereich des ersten Roboterarms und des die Achse 3 bildenden Gelenks. Bei typischen bekannten Lackierrobotern ist die Breite der seitlichen Leitungsanbaus nur wenig geringer als die des ersten Roboterarms selbst. Die große Gesamtbreite ist in vielen Fällen störend wie namentlich beim Beschichten von Fahrzeugkarossen, wenn enge Innenräume, Anbauteile (z.B. Stoßfänger) und Bauteile mit sehr kleinem Taktabstand beschichtet werden müssen, deren Zugänglichkeit behindert wird. Ferner müssen die Dimensionen des Roboters auch bei der Bemessung der Kabinenbreite berücksichtigt werden, z.B. zur Berücksichtigung der auch durch die Roboterarmbreite bestimmten Größe der Arbeitsbewegungsbereiche, wenn der erste Roboterarm sich seitlich in Richtung zur Kabinenwand bewegt. Die Kabinengröße ist bekanntlich ein wesentlicher Faktor bei der Berechnung des Gesamtaufwands einer Beschichtungsanlage.

Darüber hinaus hat die Schlauch- und Kabelführung der aus der Praxis bekannten Lackierroboter weitere Nachteile. Neben der Verschmutzungsanfälligkeit und des hierfür erforderlichen Aufwands sind vor allem Verschleiß und entsprechend geringe Lebensdauer der ständig entsprechend den Roboterachsen bewegten Leitungsanordnungen festzustellen.

Bei speziell für erweiterte Bewegungsmöglichkeiten gestalteten Robotern wurde zwar schon eine komplette Innenverlegung der benötigten Schläuche vom Sockel bis zum Handgelenk vorgeschlagen, doch unterliegen die Schläuche hier aufgrund der Gelenkgestaltung besonders ungünstigen Bewegungen und mangels geeigneter Gegenmaßnahmen entsprechend hoher Beanspruchung.

Der Erfindung liegt die Aufgabe zugrunde, die oben geschilderten Nachteile der bekannten Roboter zu vermeiden und maximale Lebensdauer der Leitungsanordnung zu gewährleisten.

Diese Aufgabe wird durch die Merkmale der Patentansprüche gelöst.

Die Erfindung beruht auf der Erkenntnis, dass sich minimaler Verschleiß der Schläuche und Kabel ergibt, wenn sie nicht nur vorzugsweise durch alle Roboterarme im Inneren des Roboters verlegt werden, sondern vor allem dafür gesorgt wird, dass die Leitungsanordnung in den Gelenken der Roboterarme bei ihren Biegungen längs oder in der Nähe einer Linie oder (gekrümmten) Ebene geführt ist, bei der ihre mechanische Beanspruchung möglichst gering ist. Betrachtet man den Innenraum des Gelenks als gebogenes System, so entspricht diese Linie oder Ebene in gewissem Sinne der "neutralen Faser" gebogener Körper. In der Regel verläuft sie durch das Zentrum des Hohlraums, durch das auch die Schwenkachse des Gelenks verläuft, wobei sich die mechanischen Bestandteile des Gelenks möglichst vollständig außerhalb des Hohlraums befinden sollen, so dass die Durchführung der Leitungsanordnung nicht gestört wird.

Vorzugsweise wird die Leitungsanordnung in dem Hohlraum des Gelenks nur in oder parallel zu der Ebene gebogen, in der die Schwenkrichtungen des Roboterarms liegen. Beispielsweise im Fall des erwähnten sechsachsigen Lackierroboters gilt dies vorzugsweise für die Gelenke beider Roboterarme, also für die Achsen 2 und 3, wobei die genannte Ebene zweckmäßig nicht nur die Längsachsen der beiden Roboterarme, sondern auch die Drehachse des Sockelkörpers enthalten kann.

Neben der im Vergleich mit bekannten Robotern erhöhten Lebensdauer der Leitungsanordnung und entsprechend hoher Zuverlässigkeit hat die Erfindung den ebenfalls wichtigen Vorteil, dass eine wesentlich schlankere Bauform des Roboters als bisher ermöglicht wird mit der Folge einer deutlichen Verbesserung der erreichbaren Arbeitsbereiche ("Arbeitsniere"), der Zugänglichkeit der Werkstücke und des erforderlichen Platzbedarfs in der Kabine.

Ein weiterer Vorteil des hier beschriebenen Roboters ist eine Verbesserung der Bewegungsdynamik aufgrund geringer Behinderung durch die Leitungsanordnung und kleiner Trägheitsmomente insbesondere des ersten Roboterarms.

Bei dem erfindungsgemäßen Roboter wird die Leitungsanordnung durch eine Zugentlastungsvorrichtung durch den Hohlraum in dem Gelenk des Roboterarms geführt.

Vorzugsweise fixiert die Zugentlastungsvorrichtung die Leitungsanordnung an der Befestigungsstelle in dem jeweiligen Roboterglied unbeweglich in axialer und/oder lateraler Richtung und/oder gegenüber Torsionen um ihre Längsachse. Dies bietet den Vorteil, dass die durch die Roboterbewegung verursachte mechanische Belastung der Leitungsanordnung entlang der Leitungsanordnung nicht weiter gegeben wird. Bei der Zugentlastungsvorrichtung kann es sich beispielsweise um eine Schraubbefestigungskonstruktion handeln, wie sie bei der Zugentlastung von Energieführungsketten bekannt ist.

Es ist jedoch alternativ auch möglich, dass die Zugentlastungsvorrichtung begrenzte Längs-, Quer- und/oder Torsionsbewegungen der Leitungsanordnung ermöglicht. Dies ist beispielsweise der Fall, wenn die Zugentlastungsvorrichtung aus einem elastischen Balg besteht, wie er beispielsweise in DE 103 04 652 beschrieben ist, so dass der Inhalt dieser Veröffentlichung der vorliegenden Beschreibung hinsichtlich der Gestaltung der Zugentlastungsvorrichtung in vollem Umfang zuzurechnen ist.

Hierbei ist vorzugsweise beiderseits des Gelenks in den jeweils angrenzenden Robotergliedern jeweils eine Zugentlastungsvorrichtung angeordnet, welche die durch das Gelenk hindurchgeführte Leitungsanordnung führt.

Es ist jedoch alternativ auch möglich, dass nur auf einer einzigen Seite des Gelenks in dem angrenzenden Roboterglied eine Zugentlastungsvorrichtung vorgesehen ist, während in dem gegenüber liegenden Roboterglied keine Zugentlastungsvorrichtung angeordnet ist.

Ferner ist zu erwähnen, dass der erfindungsgemäße Roboter vorzugsweise als Beschichtungsroboter, Applikationsroboter bzw. Lackierroboter oder Handhabungsroboter (z.B. Türöffner oder Haubenöffner in einer Lackieranlage) ausgebildet ist und vorzugsweise mehrere (z.B. 6) bewegliche Achsen aufweist.

An dem in der Zeichnung dargestellten Ausführungsbeispiel eines sechsachsigen Roboters wird die Erfindung näher erläutert. Es zeigen
- Figur 1: ein Prinzipbild des Roboters mit den auch bei dem Ausführungsbeispiel der Erfindung vorhandenen Achsen;
- Figur 2: die teilweise aufgebrochene schrägbildliche Darstellung eines erfindungsgemäß gestalteten Roboters;
- Figur 3: den Schlauch- und Kabelverlauf durch das Gelenk eines Roboterarms des Roboters; und
- Figur 4 und 5: schematische Darstellungen der Schwenklagerung der Roboterarme.

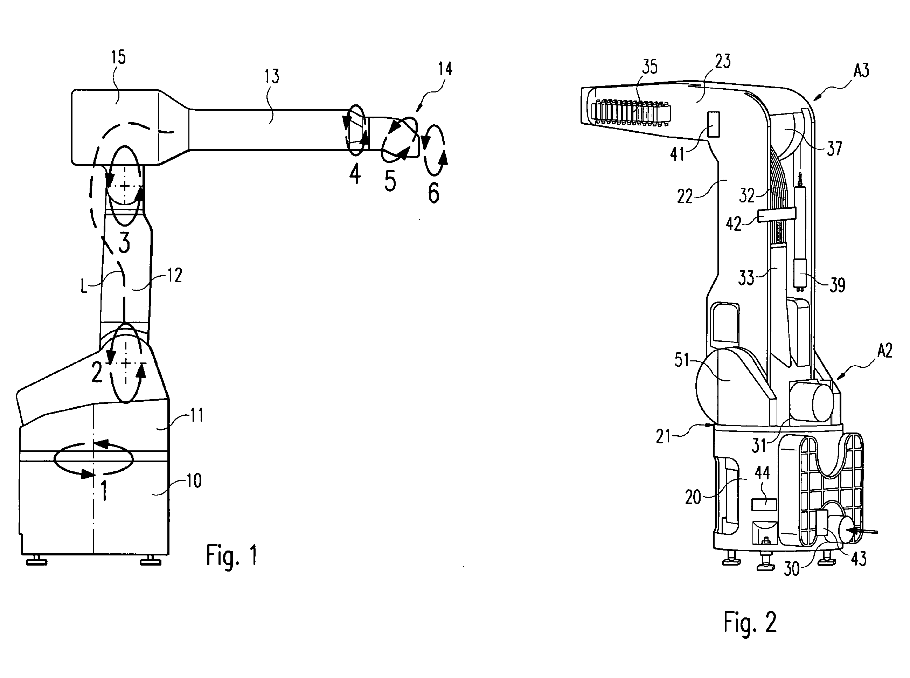

Der in Figur 1 schematisch dargestellte Roboter besteht aus einem ggf. in einer Sprühkabine verfahrbaren Grundkörper 10, auf dem um seine vertikale Achse drehbar ein Sockelkörper 11 gelagert ist (Achse 1). An dem Sockelkörper 11 ist um eine horizontale Achse schwenkbar ein erster Roboterarm 12 gelagert (Achse 2), an dessen freiem Ende einer zweiter Roboterarm 13 gelagert ist (Achse 3). Am freien Ende des zweiten Roboterarms 13 befindet sich ein dreiachsiges Handgelenk 14 (Achsen 4, 5 und 6). Bei bekannten Robotern dient der Sockelkörper 11 als Antriebsgehäuse für die Antriebseinheiten für die Achsen 1 und 2, während sich die Antriebseinheit für die Achse 3 am freien Ende des Roboterarms 12 und diejenigen für die Handgelenkachsen in einem Gehäuse 15 am Schwenklagerende des zweiten Roboterarms 13 befinden können. Die (nicht dargestellten) Antriebseinheiten bestehen jeweils aus einem elektrischen Motor und zumindest im bekannten Fall aus einem zugehörigen Getriebe. An dem Handgelenk 14 kann ein Werkzeug wie beispielsweise ein elektrostatischer Rotationszerstäuber, ein Luftzerstäuber oder eine Applikationsvorrichtung für Unterbodenschutz, Hohlraumkonservierung, Nahtabdichtung usw. oder stattdessen u.U. auch ein Handlingwerkzeug montiert sein.

Die zur Versorgung des Werkzeugs erforderlichen Leitungsanordnungen verlaufen bei den bisher in der Praxis üblichen Robotern seitlich außerhalb des Roboterarms 12, wie in Figur 1 durch eine Strichlinie L angedeutet ist, und treten erst hinter dem Gelenk in den zweiten Roboterarm 13 ein. Im Gegensatz hierzu soll gemäß dem in Figur 2 dargestellten Ausführungsbeispiel der Erfindung die Leitungsanordnung nicht nur durch einen zweiten Roboterarm 23 und, soweit erforderlich, aus diesem durch das (in Figur 2 nicht dargestellte) hohle Handgelenk zu dem Werkzeug, sondern auch durch das Innere eines ersten Roboterarms 22 verlaufen. Für die Zuführung der von außen kommenden Schläuche und Kabel sind zwei Möglichkeiten schematisch dargestellt. Die erste Möglichkeit besteht in der Durchführung durch eine Öffnung 30 eines Grundkörpers 20 z.B. in dessen unterem Seitenbereich, von wo die Leitungsanordnung nach oben durch den hohlen Innenraum eines das Gelenk A2 des Roboterarms 22 bildenden Sockelkörpers 21 in die Nähe der Schwenkachse (Achse 2) und aus dem Sockelkörper in den Innenraum des Roboterarms 22 gelangt. Stattdessen kann die Leitungsanordnung auch durch eine Zuführungsöffnung 31 in den Hohlraum des Gelenks A2 und aus diesen in der Nähe der Schwenkachse in den Roboterarm 22 geführt werden. Die Schlauchzuführung an der Zuführungsöffnung 31 kann an dem Sockelkörper 21, u.U. aber auch an dem Roboterarm 22 befestigt sein. Es ist auch möglich, einen Teil der Leitungsanordnung durch eine Öffnung wie 30 und einen anderen Teil durch eine andere Öffnung wie 31 zuzuführen.

In den ersten Roboterarm 22 des Lackierroboters können übliche erforderliche Bestandteile der Applikationstechnik wie z.B. Wandler, Ventile usw. sowie ggf. vorgesehene spezielle weitere elektrische Einrichtungen eingebaut sein (nicht dargestellt), an denen ein Teil der durch die Öffnungen 30 und/oder 31 zugeführten Schläuche, Kabel und sonstigen Leitungen enden und weitere Leitungen angeschlossen sein können. Von den in den zweiten Roboterarm 23 zu führenden Leitungen ist in Figur 2 nur eine Leitungsanordnung 32 dargestellt, die eine Gruppe von Medienschläuchen enthalten kann, während eine nur teilweise dargestellte Schlauch- und Kabelanordnung 33 insbesondere elektrische Leitungen enthalten kann. Die Leitungsanordnung 32 kann eine große Anzahl von ggf. gemolchten Schläuchen für Farblack enthalten, die ähnlich wie in einer üblichen Energieführungskette zur Bildung eines flachen bandförmigen Bündels zusammengefügt sind, das zweckmäßig mehrere Lagen parallel eng nebeneinander angeordneter Schläuche enthalten kann (in der Praxis können beispielsweise 72 halten kann (in der Praxis können beispielsweise 72 Schläuche mit einem Durchmesser von jeweils 8 mm in drei Lagen von jeweils 24 Schläuchen vorgesehen sein). Die Farbschläuche der Leitungsanordnung 32 können zu einer in den zweiten Roboterarm 23 eingebauten Farbwechselventilanordnung 35 führen. Die Breitenrichtung des Bandes soll zumindest im Bereich des Gelenks A3 parallel zu der Schwenkachse liegen. Elektrische Leitungen können ebenfalls zu einem ähnlich flachen Band zusammengefügt werden oder in einem noch zu erläuternden Explosionsschutzschlauch durch das Gelenk geführt werden.

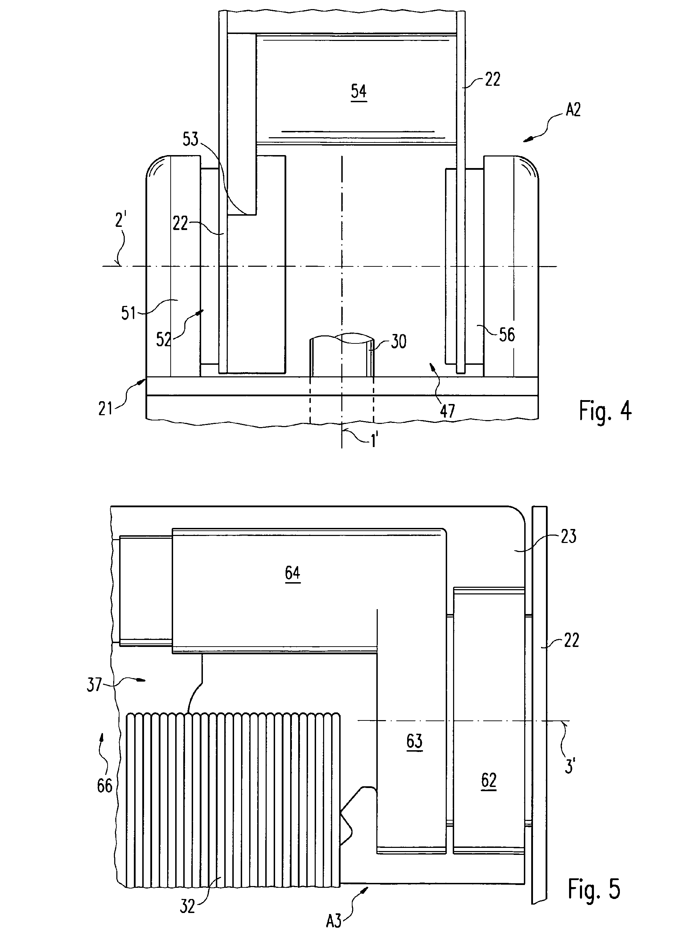

Ähnlich wie in dem Gelenk A2 (vgl. Figur 4) ist auch in dem Gelenk A3 zwischen dem Roboterarm 23 und dem Roboterarm 22, an dem er schwenkbar gelagert ist, ein Hohlraum 37 gebildet, durch den die Leitungsanordnung 32 und die für sonstige Zwecke benötigten Leitungen hindurchgeführt sind. Die Gelenke A2 und A3 sind derart symmetrisch gestaltet, dass die Leitungsanordnung bei den Roboterarmbewegungen in dem Gelenk nur längs einer Richtung gebogen wird, nämlich nur in oder parallel zu der Ebene, in der die Schwenkrichtungen der Roboterarme 22 und 23 und deren Längsachsen und auch die Drehachse des Sockelkörpers 21 liegen. Der Hohlraum 37, durch dessen Zentrum die Schwenkachse des Roboterarms 23 verläuft, ist bis auf die hindurchgeführten Leitungen vorzugsweise leer und frei von mechanischen Bestandteilen der Lager- und Antriebseinrichtungen des Roboters.

Die oben erwähnten applikationstechnischen Bestandteile und elektrischen Einrichtungen können sich an der Vorderseite des Roboterarms 1, also in Figur 2 links von der Schlauchleitungsanordnung 32 in einer (nicht dargestellten) gegen den übrigen Roboterarminnenraum geschlossenen und abgedichteten Kammer befinden, die in an sich bekannter Weise aus Explosionsschutzgründen mit Luft oder einem inerten Gas gespült und/oder unter Druck gesetzt wird. In den Roboterarm 22 kann auch der für einen elektrostatischen Zerstäuber benötigte beispielsweise rohrförmige Hochspannungserzeuger 39 eingebaut sein, der wie dargestellt neben der Schlauchleitungsanordnung 32 angeordnet sein kann, wenn für ihn ein eigenes Explosionsschutzsystem vorgesehen ist. Die Hochspannungsleitung des Hochspannungserzeugers 39 ist in einer geeigneten an sich bekannten Weise an den elektrostatischen Zerstäuber des Roboters angeschlossen. Der Hochspannungserzeuger kann sich aber auch in der Kammer auf der Vorderseite des Roboterarms befinden. Durch diese potentielle Zündquellen enthaltende Explosionsschutzkammer sollen keine Schläuche für entzündbare Medien wie Lack und Lösemittel und möglichst auch keine Pneumatikschläuche, in die bei Störungen Oder Fehlern ebenfalls entzündbare Medien gelangen können, hindurchgeführt werden. Die Schlauchleitungsanordnung 32 verläuft deshalb außerhalb der Explosionsschutzkammer. Wenn sich außerhalb des Roboterarms 22 vor dem Gelenk A2 z.B. in dem Roboterarm 23 oder vor dem Handgelenk und/oder hinter dem Gelenk A3 in dem Sockelkörper 21 oder in dem Grundkörper 20 weitere derartige Explosionsschutzkammern beispielsweise für elektrische Antriebsmotoren befinden, kann es zweckmäßig sein, die verschiedenen Kammern miteinander durch einen oder mehrere mit den Kammerinnenräumen und deren Druck kommunizierende biegbare Schläuche zu verbinden, die elektrische Leitungen enthalten können und von der Schlauchleitungsanordnung getrennt neben, über oder unter ihr durch den Hohlraum des betreffenden Gelenks A2 bzw. A3 geführt sind. Diese Schläuche bilden also selbst eine in dem Gelenk entsprechend den Roboterarmbewegungen biegbare Explosionsschutzkammer.

Erfindungsgemäß sollen die Schlauch-, Kabel- und sonstigen Leitungen so durch die Hohlräume die Gelenke wie A2 und A3 geführt werden, dass sie bei ihren Verbiegungen in dem Hohlraum möglichst geringen mechanischen Belastungen ausgesetzt sind. Wie oben schon erläutert wurde, sollen sie bei dem betrachteten Ausführungsbeispiel also möglichst nahe an der die Schwenkachse enthaltenden, in der Leitungslängsrichtung verlaufenden veränderlich gekrümmten Mittelebene des Hohlraums des Gelenks geführt werden. Um diese gewünschte optimale Position (an der "neutralen Faser" im oben erläuterten Sinn) zu gewährleisten, werden die Leitungen auf mindestens einer, vorzugsweise aber auf beiden Seiten des Gelenks durch Zugentlastungsvorrichtungen fixiert, beispielsweise im Fall des Gelenks A3 also in der Nähe des Hohlraums 37 an den beiden Roboterarmen 22 und 23, im Fall des Gelenks A2 dagegen einerseits an dem Roboterarm 22 und andererseits an dem Sockelkörper 21, z.B. an der Zuführungsöffnung 31, oder auch an dem Grundkörper 20. Bei dem Roboter gemäß Figur 2 kann beispielsweise eine erste Zugentlastungsvorrichtung 41 für die Leitungsanordnung 32 an der dargestellten Stelle innen z.B. an einer Seitenwand des Roboterarms 23 und eine zweite Zugentlastungsvorrichtung 42 innen an der Rückwand des Roboterarms 22 vorgesehen sein. Die Länge der Leitungen zwischen den Stellen ihrer Fixierung an den die Gelenke bildenden Roboterelementen, also an den Roboterarmen 22 und 23 bzw. an dem Roboterarm 22 und an dem Grund- oder Sockelkörper, ist vorzugsweise nicht größer bemessen als die Mindestlänge, die für die maximal mögliche Schwenkbewegung bei minimaler mechanischer Belastung und insbesondere ohne Zugbeanspruchung der Leitungsanordnung notwendig ist. Wenn eine Leitungsanordnung durch die Öffnung 30 des Grundkörpers 20 eingeführt wird, können auch an der Öffnung 30 bzw. im Inneren des Grundkörpers 20 Zugentlastungsvorrichtungen 43 und 44 vorgesehen sein, die die Leitungsanordnung so durch die Grund- und Sockelkörper führen, dass sich minimale Belastungen der Leitungsanordnung bei ihren Bewegungen entsprechend der Drehung des Sockelkörpers (Achse 1) ergeben.

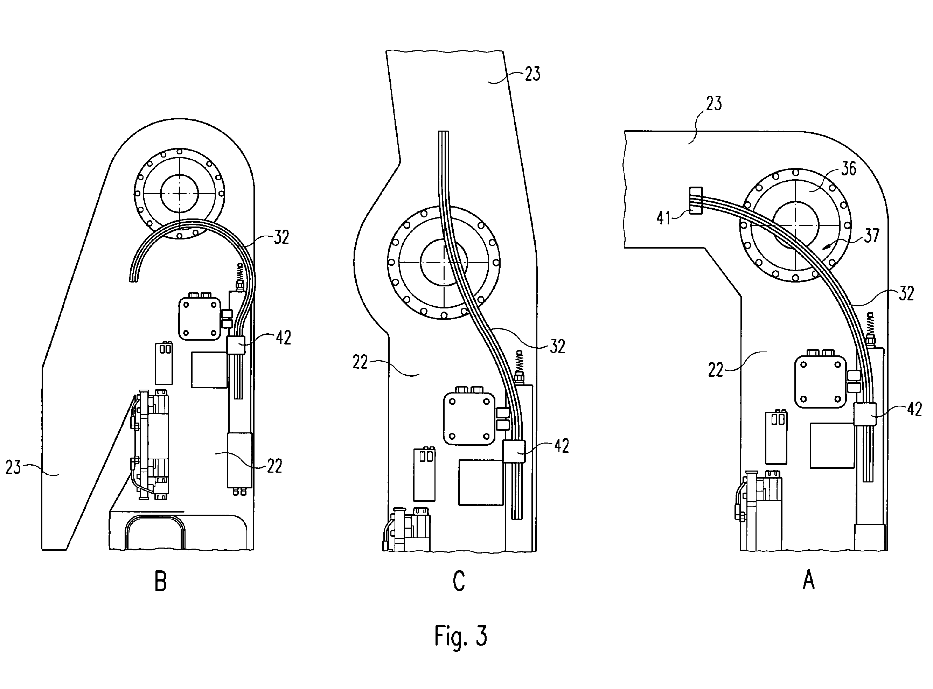

In Figur 3 ist die Führung der Schlauchleitungsanordnung 32 (Figur 2) durch das Gelenk A3 veranschaulicht. In Figur 3A sind wieder die Zugentlastungsvorrichtungen 41 und 42 am Roboterarm 23 bzw. am Roboterarm 22 angedeutet. Bei 36 ist schematisch ein kreisförmiger Lager- oder Antriebskörper des Gelenks dargestellt, der den Hohlraum 37 an dessen Seite begrenzt, und durch dessen Mitte die Schwenkachse verläuft. Bei der um 90° gegen den Roboterarm 22 abgewinkelten Stellung des Roboterarms 23 führen die Vorrichtungen 41 und 42 die Leitungsanordnung 32 darstellungsgemäß längs einer gebogenen Linie oder Ebene, die bei diesem Beispiel außermittig von der Nähe der Rückwand des Roboterarms 22 nahe an der Schwenkachse vorbei in die Mitte des Querschnitts des Roboterarms 23 verläuft.

Wenn der Roboterarm 23 gemäß Figur 3B bis zu seiner maximal möglichen Schwenkstellung von z.B. -70° bezüglich der Grundstellung in Figur 3A verschwenkt wird, kann die nun entsprechend stärker gebogene Leitungsanordnung 32 in dem Hohlraum 37 darstellungsgemäß unterhalb der Schwenkachse etwas in Richtung zur Rückwand des Roboterarms 22 ausweichen, aber weiterhin auf derselben Seite der Schwenkachse wie in Figur 3A in deren Nähe verbleiben. Wird der Roboterarm 23 dagegen gemäß Figur 3C bezüglich Figur 3A so weit nach oben gebogen, dass die Längsachsen der beiden Roboterarme nahezu dieselbe Richtung haben, verläuft die Leitungsanordnung 32 aufgrund ihrer Zugentlastungsführung ebenfalls mit nur geringen Krümmungen in dieser Richtung, wobei sie nun auf die andere Seite der Schwenkachse gewandert sein kann, aber weiterhin in deren Nähe verblieben ist. Der maximale Schwenkwinkel kann in der zu Figur 3B entgegengesetzten Richtung auch kleiner als 90° in Bezug auf die Stellung nach Figur 2A sein, beispielsweise +80°.

Wenn die Leitungsanordnung einen oder mehrere gemolchte Schläuche enthält, wird sie bei allen Schwenkstellungen so durch das Gelenk geführt, dass stets der für den ungehinderten Durchlauf der Molche erforderliche Mindestradius der Schlauchbiegung eingehalten ist.

Mit den Zugentlastungsvorrichtungen könnte die Leitungsanordnung fest und an der Befestigungsstelle unbeweglich fixiert werden, beispielsweise mit Schraubbefestigungskonstruktionen, wie sie bei der Zugentlastung von Energieführungsketten an sich bekannt und üblich sind. Es kann aber auch vorteilhaft sein, wenn die Leitungsanordnung mindestens an einem der beiden Roboterelemente in der Nähe des Gelenks durch eine Zugentlastungsvorrichtung fixiert ist, die begrenzte Längs- und/oder Torsionsbewegungen der Leitungsanordnung an der Fixierungsstelle zulässt. Die Zugentlastungsvorrichtung kann einfach mechanisch begrenzte Bewegungen der Leitungen zulassen oder zu diesem Zweck elastisch nachgiebig ausgebildet sein. Es ist auch denkbar, die Zugentlastungsvorrichtung mit der Leitungsanordnung durch einen elastisch nachgiebigen Balg zu verbinden (wie in der DE 103 04 652 für die Leitungsdurchführung einer Roboterhandachse vorgeschlagen wurde).

In Figur 4 ist schematisch eine Möglichkeit für die Lagerung des Roboterarms 22 (Figur 2 und 3) um seine Schwenkachse 2' und für den Antrieb seines Gelenks A2 (Achse 2) dargestellt. Demnach kann der Roboterarm 22 auf der einen Seite des Hohlraums 47 dieses Gelenks, durch dessen Mitte die Schwenkachse 2' verläuft, an einem auch in Figur 2 sichtbaren Trägerteil 51 des Sockelkörpers 21 über ein Getriebe 52 gelagert sein. Dem Getriebe 52 ist ein Zwischengetriebe 53 vorgelagert, das von einem in dem Roboterarm 22 befestigten elektrischen Motor 54 angetrieben wird und in einem den Hohlraum 47 auf dieser Seite begrenzenden Gehäusekörper untergebracht ist. Auf der längs der Schwenkachse 2' entgegengesetzten Seite wird der Hohlraum 47 von der Gegenlagerkonstruktion 56 begrenzt.

Wie ebenfalls in Figur 4 erkennbar ist, kann koaxial mit der Drehachse 1' des Sockelkörpers 21 (Achse 1), die bei dem betrachteten Beispiel die horizontale Schwenkachse 2' in der Mitte des Hohlraums 47 senkrecht schneiden kann, eine hier z.B. zylindrische Leitungsanordnung 33 (vgl. Figur 2) in den Hohlraum eingeführt sein, so dass die Leitungsanordnung 33 durch die Mitte des Hohlraums 47 in den Roboterarm 22 geführt ist. Die erfindungsgemäße, vorzugsweise nachgiebige Fixierung der Leitungsanordnung 33 auf der einen Seite des Gelenks A2 kann bei diesem Beispiel am Boden des Hohlraums 47 des Sockelkörpers 21 erfolgen, wenn ausreichende Torsionsfreiheit in dem darunter liegenden Innenraum des Grundkörpers 20 besteht. Stattdessen kann sich die Zugentlastungsvorrichtung aber auch in dem Grundkörper befinden, wenn die Leitungsanordnung ohne Fixierung an dem Sockelkörper in den Grundkörper hineingeführt ist.

Eine der Konstruktion des Gelenks A2 ähnliche Lager- und Antriebskonstruktion des Gelenks A3 ist schematisch und teilweise unvollständig in Figur 5 dargestellt. Hier treibt der in dem zweiten Roboterarm 23 montierte elektrische Motor 64 das koaxial zu der Schwenkachse 3' des Roboterarms 23 angeordnete Getriebe 62 über das vorgelagerte Zwischengetriebe 63 an. Das Getriebe 62 ist an der einen (in Figur 5 rechten) Innenwand des Roboterarms 22 gelagert und andererseits abtriebsseitig mit dem Roboterarm 23 verbunden. Auf der längs der Schwenkachse 3' entgegengesetzten Seite des Roboterarms 22 befindet sich an der bei 66 angedeuteten Stelle das (nicht dargestellte) Gegenlager des Gelenks A3. Auch hier begrenzen die beiden Lagerkonstruktionen zwischen sich den Hohlraum 37 des Gelenks, durch den in der oben schon beschriebenen Weise die Schlauchleitungsanordnung 32 in der Nähe der Schwenkachse 3' hindurchgeführt ist.

Die Erfindung ist nicht auf die in Figur 4 und 5 dargestellten Konstruktionen mit koaxial zu der Schwenkachse angeordneten, zwischen sich den Hohlraum des Gelenks einschließenden Lagern und Getriebegehäusen beschränkt. Eine andere Möglichkeit besteht beispielsweise in der Verwendung eines aus der Antriebstechnik bekannten Direktantriebs mit einem konstruktionsbedingt hohl ausgeführten Stator oder Rotor mit angebauter Lagerung für direkten Antrieb der betreffenden Bewegungsachse. Diese Antriebe haben in der Regel keine vorgeschalteten Untersetzungsgetriebe, so dass große Innendurchführungen für die Schläuche und Leitungen eines Lackierroboters ermöglicht werden.

## Patentansprüche

1. Roboter für ein Werkzeug für die serienweise Beschichtung, Bearbeitung oder Handhabung von Werkstücken, mit
a) einem langgestreckten Roboterarm (22, 23),
b) einem anderen Roboterelement (21, 22),
c) einem Gelenk (A2, A3), welches den Roboterarm (22, 23) schwenkbar mit dem anderen Roboterelement (21, 22) verbinden,
d) einem in dem Gelenk (A2, A3) zwischen dem Roboterarm und dem anderen Roboterelement gebildeten Hohlraum (37),
e) einer Leitungsanordnung (32, 33), die durch das andere Roboterelement (22, 21), durch den Hohlraum (37) des Gelenks (A2, A3) und in der Roboterarmlängsrichtung durch den Roboterarm (22, 23) hindurchgeführt ist und Schläuche für dem Werkzeug zuzuführende Medien und/oder elektrische Kabel oder Leitungen enthält,
**dadurch gekennzeichnet, dass**
f) die Leitungsanordnung (32, 33) von einer die Leitungsanordnung an dem Roboterarm (23, 22) und/oder an dem anderen Roboterelement (22, 21) fixierenden Zugentlastungsvorrichtung (41, 42, 43, 44) durch den Hohlraum (37) geführt ist.

2. Roboter nach Anspruch 1, **dadurch gekennzeichnet, dass** die Leitungsanordnung (32, 33) in dem Hohlraum (37) des Gelenks (A2, A3) nur in oder parallel zu der Ebene gebogen wird, in der die Schwenkrichtungen des Roboterarms (22, 23) liegen.

3. Roboter nach Anspruch 1 oder 2, **dadurch gekennzeichnet, dass** durch den Hohlraum (37) des Gelenks (A2, A3) die Schwenkachse des Roboterarms (23, 22) verläuft und die Leitungsanordnung (32, 33) durch ihre Fixierung (32, 33) bei den Schwenkbewegungen des Roboterarms durch die oder in die Nähe der Schwenkachse geführt ist.

4. Roboter nach einem der vorangehenden Ansprüche, **dadurch gekennzeichnet, dass** die Leitungsanordnung (32, 33) an dem Roboterarm (23, 22) und/oder an dem anderen Roboterelement (22, 21) durch eine Zugentlastungsvorrichtung (41-44) fixiert ist, die begrenzte Längs- und/oder Torsionsbewegungen der Leitungsanordnung (32, 33) an der Fixierungsstelle zulässt.

5. Roboter nach Anspruch 4, **dadurch gekennzeichnet, dass** die Zugentlastungsvorrichtung (41-44) elastisch nachgiebig ausgebildet ist.

6. Roboter nach Anspruch 5, **dadurch gekennzeichnet, dass** die Zugentlastungsvorrichtung (41-44) durch einen Balg mit der Leitungsanordnung (32, 33) verbunden ist.

7. Roboter nach einem vorangehenden Ansprüche, **gekennzeichnet durch**
a) einen insbesondere um eine erste Achse drehbar gelagerten Sockelkörper (21),
b) einen ersten langgestreckten Arm (22), der unter Bildung eines ersten hohlen Gelenks (A2) an dem Sockelkörper (21) um eine zweite Achse schwenkbar gelagert ist, und
c) einen unter Bildung eines zweiten hohlen Gelenks (A3) am Ende des ersten Arms (22) um eine dritte Achse schwenkbar gelagerten zweiten langgestreckten Arm (23),
d) wobei die Leitungsanordnung (32) aus einem Innenraum des Sockelkörpers (21) **durch** den Hohlraum des ersten Gelenks (A2) in den Innenraum des ersten Arms (22) hineingeführt und aus diesem **durch** den Hohlraum (37) des zweiten Gelenks (A3) in den Innenraum des zweiten Arms (23) hineingeführt ist,
e) während die Leitungsanordnung (32) auf den beiden Seiten der beiden Gelenke (A2, A3) an den Armen (22, 23) und an dem Sockelkörper (21) und/oder einem Grundkörper (20), an dem der Sockelkörper (21) um die erste Achse drehbar gelagert ist, fixiert ist.

8. Roboter nach einem der vorangehenden Ansprüche oder nach einem der vorhergehenden Ansprüche, **dadurch gekennzeichnet, dass** sich vor und hinter dem Gelenk (A2, A3) geschlossene und mit Luft oder einem anderen Explosionsschutzgas spülbare und/oder unter Druck setzbare Kammern für elektrische Bauteile befinden und Schläuche für entzündbare Medien außerhalb dieser Kammern verlaufen, wobei die Explosionsschutzkammern miteinander durch einen mit ihren Innenräumen und deren Druck kommunizierenden biegbaren Schlauch verbunden sind, der elektrische Leitungen enthält und von den Schläuchen (32) für entzündbare Medien getrennt neben diesen durch den Hohlraum (37) des Gelenks (A2, A3) geführt ist.

9. Roboter nach einem der vorangehenden Ansprüche, **dadurch gekennzeichnet, dass** in der Leitungsanordnung (32) enthaltene Schläuche für Beschichtungsmedien unterschiedlicher Farbe an eine Farbwechselventilanordnung (35) angeschlossen sind, die in einem der Roboterarme (23) des Roboters angeordnet ist.

10. Roboter nach einem der vorangehenden Ansprüche, **dadurch gekennzeichnet, dass** die durch den Hohlraum (37) mindestens eines der Gelenke (A2, A3) des Roboters hindurchgeführte Leitungsanordnung (32) gemolchte Schläuche enthält.

11. Roboter nach einem der vorangehenden Ansprüche, **dadurch gekennzeichnet, dass** die durch den Hohlraum (37) mindestens eines der Gelenke (A2, A3) des Roboters hindurchgeführten Schläuche für dem Werkzeug zuzuführende Medien und/oder elektrische Leitungen zur Bildung eines flachen bandförmigen Bündels zusammengefügt sind, das eine oder mehrere Lagen parallel eng nebeneinander angeordneter Schläuche oder Leitungen enthält, wobei die Breitenrichtung des Bandes in dem Hohlraum (37) parallel zu der Achse liegt, um die der Roboterarm (22, 23) geschwenkt wird.

12. Roboter nach einem der vorangehenden Ansprüche, **dadurch gekennzeichnet, dass** die Länge der Leitungen (32, 33) zwischen den Stellen ihrer Fixierung an dem Roboterarm (22, 23) und dem anderen Roboterelement (22, 21) nicht größer bemessen ist als die Mindestlänge, die für die maximal mögliche Schwenkbewegung bei minimaler mechanischer Belastung der Leitungsanordnung notwendig ist.

13. Roboter nach einem der vorangehenden Ansprüche, **dadurch gekennzeichnet, dass** die Leitungsanordnung Leitungen enthält, mit denen.Bestandteile des Werkzeugs und/oder ihm zugeführte Medien auf Hochspannungspotential gelegt werden.
